# EUROPEAN PATENT APPLICATION

(11) **EP 4 830 980 A1**
(43) Date of publication of application: **28.10.2026**
(21) Application number: 25769689.8
(22) Date of filing: 08.05.2025
(51) Int. Cl.: B60L 50/62, B60W 10/08, B60L 15/20, H02P 9/00

(54) **CONTROL METHOD FOR COMPENSATION TORQUE OF RANGE EXTENDER FOR ENGINEERING MACHINERY VEHICLE**

(30) Priority: 26.06.2024 CN 202410840390
(71) Applicant: Jiangsu XCMG Construction Machinery Research Institute Ltd., Xuzhou, Jiangsu 221004 (CN)
(72) Inventor: WANG, Hongqiang, Xuzhou, Jiangsu 221004 (CN); XUE, Ka, Xuzhou, Jiangsu 221004 (CN); ZHANG, Shutao, Xuzhou, Jiangsu 221004 (CN)
(74) Representative: Hauck Patent- und Rechtsanwälte PartmbB
(86) International application number: PCT/CN2025/093381
(87) International publication number: WO 2025/190427

(57) **Abstract**

This disclosure relates to a control method for torque compensation of a range extender for an engineering machinery vehicle, including: determining a feed-forward torque according to driver-demanded power, and controlling the range extender to work with the feed-forward torque; calculating a power compensation torque according to a difference between an actually generated power of the range extender and the driver-demanded power; determining whether to add an additional compensation torque according to actual working conditions of the engineering machinery vehicle; if so, setting a final compensation torque as a sum of the power compensation torque and the additional compensation torque; if not, setting the final compensation torque as the power compensation torque; sending the final compensation torque to the range extender, so as to be taken as a power generation torque of the range extender together with the feed-forward torque.

## Description

### CROSS-REFERENCE TO RELATED APPLICATIONS

The present application is based on and claims the priority to the Chinese application No. 202410840390.7, filed on June 26, 2024, the disclosure of which is incorporated herein in its entirety.

### TECHNICAL FIELD

The present disclosure relates to a control method for torque compensation of a range extender for an engineering machinery vehicle.

### BACKGROUND

An electric engineering machinery vehicle belongs to an engineering machinery vehicle which uses electric energy as power to drive motors. The electric engineering machinery vehicle is applied more and more widely due to environmental protection and energy saving properties.

At present, power batteries are limited in energy storage, and cannot meet the requirement of continuous operation of the electric engineering machinery vehicle. In order to solve the problem, a technology known to the inventors is, to increase the endurance time by changing the pure electric power technical route into a range-extended hybrid power technical route, so as to meet the requirement of continuous operation of the electric engineering machinery vehicle.

The main equipment of the range-extended hybrid power technology includes a range extender which is provided with an engine, a generator driven by the engine and the like. The range extender, as a new energy source in the engineering machinery vehicle, can improve the operation time and ensure the dynamic property of the whole vehicle at low battery. Meanwhile, the decoupling of the range extender from a driving system of the engineering machinery vehicle, enables flexible control of the operating point of the engine, and effectively improves the working efficiency and fuel economy of the engine.

### SUMMARY

The present disclosure provides a control method for torque compensation of a range extender for an engineering machinery vehicle, capable of overcoming at least one of the above-mentioned drawbacks in existing products.

One aspect of the present disclosure relates to a control method for torque compensation of a range extender for an engineering machinery vehicle, where, the engineering machinery vehicle includes a power battery unit and the range extender so as to drive a vehicle motor, and the method comprises:
determining a feed-forward torque according to a driver-demanded power, and controlling the range extender to work with the feed-forward torque;
calculating a power compensation torque according to a difference between an actually generated power of the range extender and the driver-demanded power;
determining whether to add an additional compensation torque according to actual working conditions of the engineering machinery vehicle;
if so, setting a final compensation torque as a sum of the power compensation torque and the additional compensation torque; if not, setting the final compensation torque as the power compensation torque;
sending the final compensation torque to the range extender, so as to be taken as a power generation torque of the range extender together with the feed-forward torque.

In some embodiments, the step of determining a feed-forward torque includes obtaining an optimum generated power when the range extender works according to the driver-demanded power, and calculating the feed-forward torque of a generator of the range extender and a demanded rotation speed of an engine of the range extender, according to the driver-demanded power and the optimum generated power.

In some embodiments, the generator and the engine are controlled to work at the feed-forward torque and the demanded rotation speed, respectively, for at least one operating cycle.

In some embodiments, the step of calculating a power compensation torque includes calculating the power compensation torque by the following equation: ${T}_{diff} = f \left({P}_{tgt},Δ{P}_{diff}\right)$ where:
***T_{diff}*** is the power compensation torque;
***P_{tgt}*** is the driver-demanded power;
Δ***P_{diff}*** is the difference **(*P_{tgt}*** - ***P_{act}*)** between the driver-demanded power ***P_{tgt}*** and the actually generated power ***P_{act}**.*

In some embodiments, the step of calculating a power compensation torque includes obtaining the power compensation torque by interpolation lookup from a mapping table, according to the difference between the driver-demanded power and the actually generated power, and the driver-demanded power.

In some embodiments, the additional compensation torque include an accessory compensation torque, and the accessory compensation torque is calculated according to power consumption of engine accessories of the range extender.

In some embodiments, the accessory compensation torque is calculated by the following equation: ${T}_{acc} = f \left({P}_{acc}, {N}_{act}\right)$ where:
***T_{acc}*** is the accessory compensation torque;
***P_{acc}*** is the power consumption of the engine accessories of the range extender;
***N_{act}*** is a current rotation speed of the engine of the range extender.

In some embodiments, the accessory compensation torque is calculated by the following equation: ${T}_{acc} = \frac{{P}_{acc}}{{N}_{act}} ∗ 9550$ where:
***T_{acc}*** is the accessory compensation torque;
***P_{acc}*** is the power consumption of the engine accessories of the range extender;
***N_{act}*** is a current rotation speed of the engine of the range extender.

In some embodiments, the step of determining whether to add an additional compensation torque includes determining whether a drop in battery SOP of the power battery unit has occurred, and in the event of a gradual drop in the battery SOP, including the accessory compensation torque in the final compensation torque.

In some embodiments, the step of determining whether to add an additional compensation torque comprises including the accessory compensation torque in the final compensation torque at all times.

In some embodiments, the additional compensation torque include a charge compensation torque, where, the charge compensation torque is calculated according to the battery SOP of the power battery unit and an operation load of the engineering machinery vehicle.

In some embodiments, the charge compensation torque is calculated by the following equation: ${T}_{sop} = {T}_{Init} ∗ {μ}_{diff}$ where:
**Tₛₒₚ** is the charge compensation torque;
***T_{Init}*** is an initial charge compensation torque, which is a function of the battery SOP of the power battery unit and the operation load of the engineering machinery vehicle;
***µ_{diff}*** is a compensation factor, which is positively correlated to a rate of change of the battery SOP of the power battery unit over time.

In some embodiments, the step of determining whether to add an additional compensation torque includes continuing to determine whether a drop in the battery SOP of the power battery unit has occurred, and upon detecting that the battery SOP of the power battery unit drops below a first charge threshold, including the charge compensation torque in the final compensation torque; when the battery SOP of the power battery unit rises back to a value equal to or greater than a second charge threshold, not including the charge compensation torque in the final compensation torque.

In some embodiments, the second charge threshold is greater than or equal to the first charge threshold.

Additional features and advantages of the disclosed subject matter will be set forth in the following description, and in part will be obvious from the description, or may be learned by practice of the disclosed subject matter. The advantages of the subject matter of the present disclosure will be realized and attained by the structure particularly pointed out in the written description and claims thereof as well as the appended drawings.

It is to be understood that both the foregoing general description and the following detailed description are exemplary and explanatory, and are intended to provide further explanation of the subject matter of the present disclosure as claimed.

### BRIEF DESCRIPTION OF THE DRAWINGS

Aspects of the present disclosure will be better understood upon reading the following DETAILED DESCRIPTION in conjunction with the drawings in which:
FIG. 1 shows a schematic diagram of a range extender torque compensation system, according to some embodiments of the present disclosure;
FIG. 2 shows a schematic diagram of a mapping table of power compensation torques;
FIG. 3 shows a schematic diagram of a mapping table of an initial charge compensation torque;
FIG. 4 shows an exemplary flow diagram for arbitrating on the compensation torque by the range extender torque compensation system.

### DETAILED DESCRIPTION

The present disclosure will now be described with reference to the accompanying drawings, which illustrate several embodiments of the disclosure. It should be understood, however, that the present disclosure may be presented in many different ways and is not limited to the embodiments described below; rather, the embodiments described below are intended to provide a more complete disclosure of the present disclosure, and to fully convey the protection scope of the disclosure to those skilled in the art. It is also to be understood that the embodiments disclosed herein can be combined in various ways to provide further additional embodiments.

It should be understood that, throughout the drawings, like reference numerals denote like elements. In the drawings, the size of some of the features may be varied for clarity.

It is to be understood that the terminology used in the description is for the purpose of describing particular embodiments only, and is not intended to limit the disclosure. All terms (including technical and scientific terms) used in the description have the same meaning as commonly understood by one of ordinary skill in the art, unless otherwise defined. Well-known functions or constructions may not be described in detail for brevity and/or clarity.

The singular forms "a", "an" and "the" as used in the description include plural forms unless clearly dictated otherwise. The terms "include", "comprise" and "contain" as used in the description specify the presence of stated features, but do not preclude the presence of one or more other features. The term "and/or" as used in this description includes any and all combinations of one or more of associated listed items. The terms "between X and Y" and "between about X and Y" as used in the description should be construed to include X and Y. The term "between about X and Y" as used in the description means "between about X and about Y" and the term "from about X to Y" as used in the description means "from about X to about Y".

In the description, when an element is referred to as being "on", "attached" to, "connected" to, "coupled" with, or "contacting" another element, etc., it can be directly on, attached to, connected to, coupled with, or contacting the other element, or intervening elements may be present. In contrast, when an element is referred to as being "directly on", "directly attached" to, "directly connected" to, "directly coupled" with or "directly contacting" another element, there are no intervening elements present. In the description, one feature arranged "adjacent" to another feature, may mean that one feature has a portion overlapping with or is located above or below the adjacent feature.

In the description, spatial terms such as "up", "down", "left", "right", "front", "rear", "high", "low", and the like may describe a relationship of one feature with another feature in the drawings. It will be understood that the spatial terms are intended to encompass different orientations of a device in use or operation in addition to orientations depicted in the drawings. For example, features originally described as "below" other features, when the device in the drawings is turned over, may now be described as "above" the other features. The device may also be otherwise oriented (rotated 90 degrees or at other orientations) and the relative spatial relationships may be interpreted accordingly.

In order to effectively cooperate the range extender and the power battery and improve the energy utilization efficiency of the vehicle, the power generation process of the range extender needs to be controlled. In one technology known to the inventors, after the intervention of the range extender, the generated power of the range extender is determined based primarily on the current driver-demanded power, without considering the effect of the current working conditions (e.g., current vehicle speed, load, power battery SOP, etc.) of the engineering machinery vehicle on the power generation demand. This results in a deviation in the output generated power of the range extender, so that the system effective available power does not match the driver-demanded power.

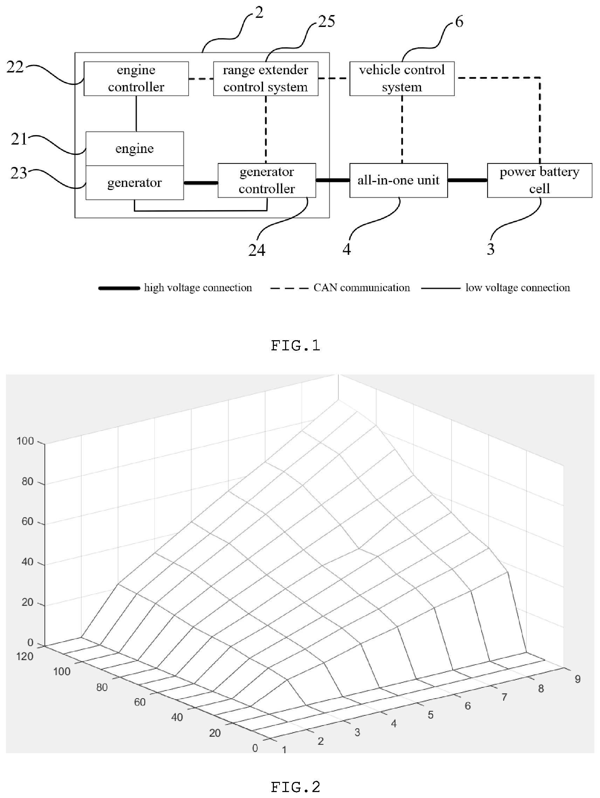

The disclosure relates to a control method for torque compensation of a range extender for an engineering machinery vehicle, which effectively solves the problem of mismatch between the system effective available power and the driver-demanded power caused by the deviation in the generated power of the range extender. FIG. 1 shows a schematic diagram of a range extender torque compensation system 1 according to some embodiments of the present disclosure. As shown, the range extender torque compensation system 1 may include a range extender 2, a power battery unit 3, and an all-in-one unit 4. The all-in-one unit 4 can coordinate and manage distribution of energy sources of the whole vehicle. The all-in-one unit 4 may be operated such that the power battery unit 3 alone drives a vehicle motor (not shown), or the range extender 2 alone drives the vehicle motor, and additionally charges the power battery unit 3. The power battery unit 3 may include at least one of a power battery or a super capacitor.

The range extender 2 may include an engine 21 and an engine controller 22 for the engine 21, a generator 23 and a generator controller 24 for the generator 23, and a range extender control system 25. The engine 21 may be mechanically connected to the generator 23, to drive the generator 23 to generate electricity. In some embodiments, the engine 21 and the generator 23 may be directly connected coaxially, such that the engine 21 and the generator 23 operate at the same rotation speed. The generator 23 and the power battery unit 3 may both be electrically connected to the all-in-one unit 4. The engine controller 22 may send a rotation speed instruction to the engine 21, and detect and feedback information such as the current engine rotation speed of the engine 21, the operating state of engine accessories, and the like. The engine accessories include various accessory components required for the operation of the engine 21, such as pumps, sensors, and the like of the engine 21. The generator controller 24 may send a torque instruction to the generator 23, and detect and feedback information such as the current generator rotation speed, torque, and actually generated power of the generator 23. The range extender control system 25 may be in communication connection (e.g., via a controller area network CAN) with the engine controller 22, the generator controller 24, etc. for communicating information, to update the state control of the engine 21, the generator 23, etc. in real time.

The range extender torque compensation system 1 may also include a vehicle control system 6. The vehicle control system 6 may be in communication connection with the range extender control system 25, the all-in-one unit 4, the power battery unit 3, and the like (for example, via CAN), to detect the operating state of the modules, send instructions to the modules, and the like.

The range extender torque compensation system 1 may obtain a feed-forward torque for the generator 23 according to the driver-demanded power. The range extender torque compensation system 1 may calculate a final compensation torque for the generator 23 according to actual working conditions. For example, the range extender torque compensation system 1 may calculate a power compensation torque for the generator 23 according to a difference between the actually generated power of the generator 23 and the driver-demanded power. The range extender torque compensation system 1 may calculate an accessory compensation torque for the generator 23 according to power consumption of engine accessories. The range extender torque compensation system 1 may calculate a charge compensation torque for the generator 23 according to battery SOP of the power battery unit 3 and an operation load. The range extender torque compensation system 1 may arbitrate on the compensation torque according to the current working state of the range extender 2 to obtain the final compensation torque. The range extender torque compensation system 1 takes the final compensation torque as a power generation torque of the generator 23 together with the feed-forward torque, so that the generated power of the range extender 2 can change with the driver-demanded power, and torque compensation is carried out according to the actual working conditions, thereby ensuring the system effective available power.

The specific operation of the range extender torque compensation system 1 will be discussed below. When the vehicle is travelling, the range extender torque compensation system 1 can acquire information such as state of battery power (SOP), from the power battery unit 3. The range extender torque compensation system 1 can acquire information such as the operation load of the engineering machinery vehicle, from the vehicle control system 6. After the range extender 2 is started, the range extender torque compensation system 1 can acquire information such as the driver-demanded power in real time, from the vehicle control system 6 (e.g., via driver input). The range extender torque compensation system 1 can acquire information such as the power consumption of the engine accessories, rotation speeds of the engine 21 and the generator 23, real-time power generation power of the generator 23, from the range extender control system 25.

The range extender torque compensation system 1 may derive demanded rotation speed of the engine 21 and the feed-forward torque of the generator 23 according to the acquired driver-demanded power.

In some embodiments, the range extender torque compensation system 1 may derive an optimum generated power for the operation of the range extender 2 by means of, for example, looking up a mapping table (or MAP) according to the acquired driver-demanded power. The optimum generated power means that the power generation efficiency of the generator 23 is highest and/or the fuel economy of the engine 21 is best at that power. In some embodiments, the optimum generated power may be derived by test calibration on bench based on the universal characteristic curve of the engine 21 and the generating efficiency mapping table of the generator 23, for the working condition of the engineering machinery vehicle. The range extender torque compensation system 1 can calculate the demanded rotation speed of the engine 21 and the feed-forward torque of the generator 23 by the driver-demanded power and the optimum generated power, as shown in the following equation: $\left[{N}_{dmd}, {T}_{fd}\right] = f \left({P}_{tgt}, {P}_{map}\right)$ where:
***N_{dmd}*** is the demanded rotation speed of the engine;
***T_{fd}*** is the feed-forward torque of the generator;
***P_{tgt}*** is the driver-demanded power;
***Pₘₐₚ*** is the optimum generated power.

In some embodiments, the range extender torque compensation system 1 may calculate the demanded rotation speed of the engine 21 from the driver-demanded power and the optimum generated power. The range extender torque compensation system 1 may then calculate the feed-forward torque of the generator 23 from the demanded rotation speed of the engine 21 and the driver-demanded power.

The range extender torque compensation system 1 may send the demanded rotation speed of the engine 21 and the feed-forward torque of the generator 23 to the engine controller 22 and the generator controller 24, respectively. The engine controller 22 and the generator controller 24 control the engine 21 and the generator 23 to operate at the demanded rotation speed and the feed-forward torque, respectively, and continue for at least one operating cycle of the range extender control system 25.

After the engine 21 and the generator 23 operate for a period of time, the range extender torque compensation system 1 may calculate the final compensation torque for the generator 23 based on actual working conditions. The final compensation torque may, for example, include one or more of a power compensation torque, an accessory compensation torque, a charge compensation torque, or the like. The range extender torque compensation system 1 can arbitrate on the compensation torque according to a torque compensation strategy, to compensate the torque of the generator 23, so as to ensure the system effective available power. The power compensation torque, the accessory compensation torque, and the charge compensation torque will be described separately below.

### Power compensation torque

The range extender torque compensation system 1 may acquire the actually generated power during the operation of the range extender through the generator controller 24. The range extender torque compensation system 1 may calculate the power compensation torque for compensating for the generator 23 according to a difference between the actually generated power and the driver demanded power.

In some embodiments, the range extender torque compensation system 1 may calculate the power compensation torque for the generator 23 according to the difference and the driver-demanded power by the following equation: ${T}_{diff} = f \left({P}_{tgt},Δ{P}_{diff}\right)$ where:
***T_{diff}** is* the power compensation torque;
***P_{tgt}*** is the driver-demanded power;
Δ***P_{diff}*** is the difference **(*P_{tgt} - P_{act}*)** between the driver-demanded power ***P_{tgt}*** and the actually generated power ***P_{act}**.*

In other embodiments, the range extender torque compensation system 1 may obtain the power compensation torque for the generator 23 by interpolation lookup from a mapping table, according to the difference and the driver-demanded power. The mapping table of the power compensation torque may be set based on empirical values. FIG. 2 shows a schematic diagram of a mapping table of power compensation torque, in which two horizontal axes are the difference between the actually generated power and the driver-demanded power, and the driver-demanded power, respectively, and the vertical axis is the power compensation torque.

### Accessory compensation torque

The range extender torque compensation system 1 may capture the power consumption of the engine accessories during operation of the range extender via the engine controller 22. The range extender torque compensation system 1 may calculate the accessory compensation torque for compensating for the generator 23 according to the power consumed by the engine accessories.

In some embodiments, the range extender torque compensation system 1 may acquire the power consumption of the engine accessories during operation and the current rotation speed of the engine 21 via the engine controller 22. The range extender torque compensation system 1 calculates the accessory compensation torque for the generator 23 based on the power consumption of the engine accessories and the current rotation speed of the engine 21, as shown in the following equation: ${T}_{acc} = f \left({P}_{acc}, {N}_{act}\right)$ where:
***T_{acc}*** is the accessory compensation torque;
***P_{acc}*** is the power consumption of the engine accessories;
***N_{act}*** is the current rotation speed of the engine.

In some embodiments, the equation for calculating the accessory compensation torque for the generator 23 may be as follows: ${T}_{acc} = \frac{{P}_{acc}}{{N}_{act}} ∗ 9550$ where:
***T_{acc}*** is the accessory compensation torque;
***P_{acc}*** is the power consumption of the engine accessories;
***N_{act}*** is the current rotation speed of the engine.

### Charge compensation torque

The range extender torque compensation system 1 can acquire the actual battery SOP of the power battery unit 3 during the operation of the range extender. The range extender torque compensation system 1 may acquire the operation load of the engineering machinery vehicle from the vehicle control system. The range extender torque compensation system 1 calculates the charge compensation torque for compensating for the generator 23 according to the actual battery SOP of the power battery unit 3 and the operation load of the engineering machinery vehicle.

In some embodiments, the range extender torque compensation system 1 may calculate an initial charge compensation torque according to the battery SOP of the power battery unit 3 and the operation load of the engineering machinery vehicle. In one example, the initial charge compensation torque may be a function of the battery SOP of the power battery unit 3 and the operation load of the engineering machinery vehicle, as shown in the following equation: ${T}_{Init} = f \left({P}_{sop},{M}_{load}\right)$ where:
***T_{Init}*** is the initial charge compensation torque;
***Pₛₒₚ*** is the battery SOP of the power battery unit;
***M_{load}*** is the operation load of the engineering machinery vehicle.

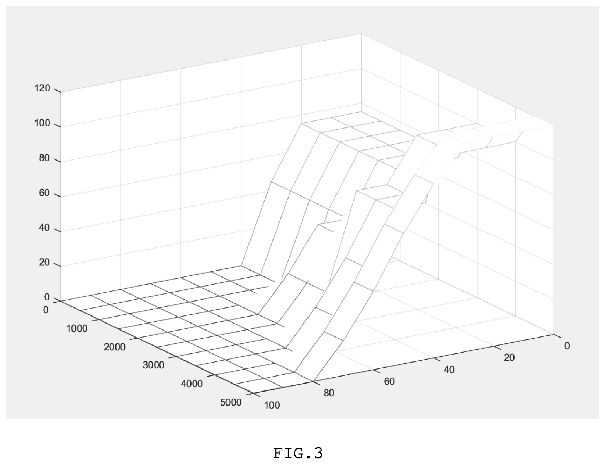

In another example, the initial charge compensation torque may be an empirical value calibrated through multiple trial tests. FIG. 3 shows a schematic diagram of a mapping table of an initial charge compensation torque, where, two horizontal axes are the battery SOP and the operation load, respectively, and the vertical axis is the initial charge compensation torque.

The range extender torque compensation system 1 may determine a compensation factor for the initial charge compensation torque according to a rate of change of the battery SOP over time. The compensation factor is positively correlated with the rate of change of the battery SOP over time, as shown in the following equation: ${μ}_{diff} = Δ {P}_{sop} / Δ {t}_{sop}$ where:
***µ_{diff}*** is the compensation factor;
**Δ***P**ₛₒₚ*** is the change of the battery SOP over time; for example, Δ***Pₛₒₚ*** may be calculated once every 10 operating cycles of the range extender controller: $Δ {P}_{sop} = \left\{\begin{matrix}\left|{P}_{t 10}-{P}_{t 0}\right| , & {P}_{t 10} < {P}_{t 0} \\ 0 , & {P}_{t 10} \geq {P}_{t 0}\end{matrix}\right.$;
**Δ*tₛₒₚ*** is an time interval.

The compensation factor becomes progressively larger as the rate of change of the battery SOP over time becomes larger or decreases faster. The compensation factor is used for giving a larger compensation coefficient to the range extender in the operating process with larger power consumption, and increasing the generated energy of the range extender, so that the power of the power battery unit is kept relatively stable in a certain time.

The range extender torque compensation system 1 can calculate the charge compensation torque for the generator 23 according to a product of the initial charge compensation torque and the compensation factor, as shown in the following equation. ${T}_{sop} = {T}_{Init} ∗ {μ}_{diff}$ where:
**Tₛₒₚ** is the charge compensation torque;
***T_{Init}*** is the initial charge compensation torque;
***µ_{diff}*** is the compensation factor.

That is, the application of the charge compensation torque is changed according to the rate of change of the current battery SOP. When the decreasing rate of the battery SOP is large, the operation-demanded power is large at the moment, and the generated power of the range extender cannot meet the operation requirement, so that the gradient step of the charge compensation torque is large, and the generated power of the range extender is increased rapidly to meet the current operation requirement. When the decreasing rate of the battery SOP is low, the difference between the generated power of the range extender and the operation-demanded power is small, so that the gradient step of the charge compensation torque is small, and the rotation speed of the engine slowly and stably changes, reducing the impact force during work.

### Torque compensation strategy

The range extender torque compensation system 1 can determine the final compensation torque after arbitrating on the compensation torque, according to the current working state of the range extender 2 by using a torque compensation strategy, and the final compensation torque is taken as the power generation torque executed by the generator 23 together with the feed-forward torque.

The torque compensation strategy is adjusted according to the actual working conditions of the vehicle, and factors such as system efficiency, accessory consumption, battery power, vehicle operation load are fully considered. The torque compensation strategy can not only ensure the continuous operation requirement and the power performance of the vehicle, but also maintain the power of the power battery in a relatively stable range, and simultaneously ensure the stability of the rotation speed during operation of the engine.

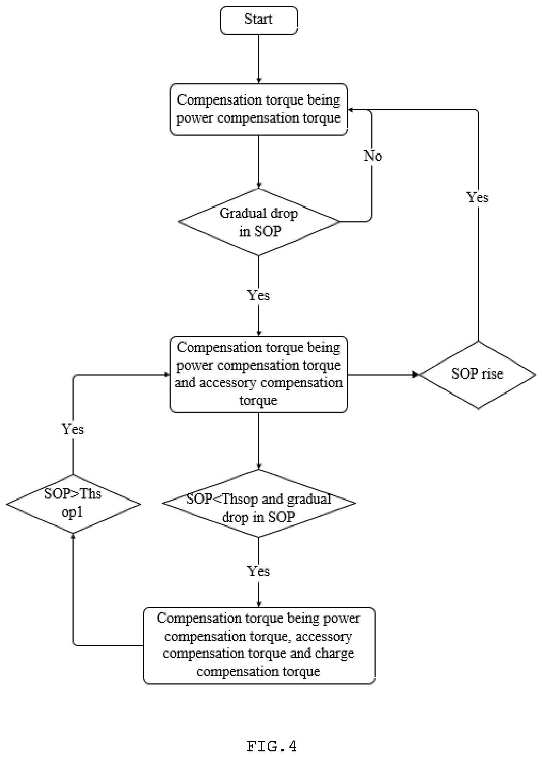

FIG. 4 shows an exemplary flow diagram for arbitrating on the compensation torque by the range extender torque compensation system 1. In some embodiments, after the range extender 2 is started, the range extender torque compensation system 1 may always send the power compensation torque to the range extender 2, to compensate for the power generation torque of the generator 23. This ensures that the generated power of the range extender 2 is executed in accordance with the driver-demanded power, reducing the influence of the system efficiency on the actually generated power.

In some embodiments, after the range extender 2 is started, the range extender torque compensation system 1 may determine whether a drop in the battery SOP of the power battery unit 3 has occurred. In an event the actually generated power of the range extender 2 cannot meet the operating power demand, the battery SOP of the power battery unit 3 will gradually drop. At this time, the range extender torque compensation system 1 may include the accessory compensation torque in the final compensation torque, to compensate for the power generation torque of the generator 23 for the consumption caused by the engine accessories. In other embodiments, however, after the range extender 2 is started, the range extender torque compensation system 1 may always include the accessory compensation torque in the final compensation torque, without determining whether a drop in the battery SOP of the power battery unit 3 has occurred, to compensate for the power generation torque of the generator 23.

In some embodiments, after the application of the accessory compensation torque, the range extender torque compensation system 1 may continue to determine whether a drop in the battery SOP of the power battery unit 3 has occurred. In the event that the actually generated power of the range extender 2 cannot meet the operating power demand, the battery SOP of the power battery unit 3 will still gradually drop. Upon detecting that the battery SOP of the power battery unit 3 is less than a charge threshold **Thₛₒₚ,** the range extender torque compensation system 1 may include the charge compensation torque in the final compensation torque, to compensate for the power generation torque of the generator 23; the compensation is stopped when the battery SOP of the power battery unit 3 rises back to a value equal to or greater than a charge threshold **Thₛₒₚ₁.** The threshold **Thₛₒₚ₁** and the threshold **Thₛₒₚ** may be calibrated based on actual working conditions. In some examples, the threshold **Thₛₒₚ1** may be greater than the threshold **Thₛₒₚ;** in other examples, the threshold **Thₛₒₚ₁** may be equal to the threshold **Thₛₒₚ.** In other embodiments, the range extender torque compensation system 1 may determine whether to include the charge compensation torque in the final compensated torque before applying the accessory compensation torque, or without applying the accessory compensation torque.

It should be appreciated that in some embodiments, the torque compensation strategy may consider whether to include the power compensation torque, the accessory compensation torque, and the charge compensation torque in the final compensation torque. In some embodiments, the torque compensation strategy may consider whether to include both the power compensation torque and the accessory compensation torque in the final compensation torque. In some embodiments, the torque compensation strategy may consider whether to include both the power compensation torque and the charge compensation torque in the final compensation torque. In other embodiments, the torque compensation strategy may only consider whether to include the power compensation torque in the final compensation torque, and not consider the accessory compensation torque and the charge compensation torque at all. In some embodiments, the torque compensation strategy may consider whether to include other forms of compensation torque in the final compensation torque, in addition to the power compensation torque, the accessory compensation torque, and the charge compensation torque.

According to the control method for torque compensation of a range extender for an engineering machinery vehicle in the embodiments of the disclosure, the power generation torque of the range extender is compensated, by comprehensively considering the driver-demanded power, the battery SOP, the operation load and the consumption of the engine accessories in the power generation working conditions of the range extender, which effectively solves the deviation in the generated power of the range extender, and ensures the system effective available power.

In the present disclosure, by implementing the power compensation torque, the deviation between the generated power of the range extender and the driver-demanded power is solved, ensuring the continuous operation requirement and the power performance of the engineering machinery vehicle.

In the present disclosure, by implementing the charge compensation torque, the range extender system is adapted to the variable load working conditions of the engineering machinery vehicle, and the power of the battery is kept in a relatively stable range, which ensures the effective available power of the energy supply system, and can meet the sudden heavy load requirement in the operation process of the engineering machinery vehicle.

The control method of the present disclosure directly compensates for the power generation torque of the generator, without intermediate relevant logic and conversion, and thus has direct control and high efficiency.

Although exemplary embodiments of the present disclosure have been described, those skilled in the art will appreciate that many variations and modifications may be made to the exemplary embodiments of the present disclosure without essentially departing from the spirit and scope of the disclosure. Accordingly, all such variations and modifications are intended to be included within the protection scope of the present disclosure as defined in the claims. The disclosure is defined by the appended claims, with equivalents of the claims to be included therein.

## Claims

1. A control method for torque compensation of a range extender for an engineering machinery vehicle, wherein, the engineering machinery vehicle comprises a power battery unit and the range extender so as to drive a vehicle motor, and the method comprises:
determining a feed-forward torque according to a driver-demanded power, and controlling the range extender to work with the feed-forward torque;
calculating a power compensation torque according to a difference between an actually generated power of the range extender and the driver-demanded power;
determining whether to add an additional compensation torque according to actual working conditions of the engineering machinery vehicle; if so, setting a final compensation torque as a sum of the power compensation torque and the additional compensation torque; if not, setting the final compensation torque as the power compensation torque;
sending the final compensation torque to the range extender, so as to be taken as a power generation torque of the range extender together with the feed-forward torque.

2. The control method according to claim 1, wherein, the step of determining a feed-forward torque comprises obtaining an optimum generated power when the range extender works according to the driver-demanded power, and calculating the feed-forward torque of a generator of the range extender and a demanded rotation speed of an engine of the range extender, according to the driver-demanded power and the optimum generated power.

3. The control method according to claim 2, wherein, the generator and the engine are controlled to work at the feed-forward torque and the demanded rotation speed, respectively, for at least one operating cycle.

4. The control method according to any one of claims 1-3, wherein, the step of calculating a power compensation torque comprises calculating the power compensation torque by the following equation: ${T}_{diff} = f \left({P}_{tgt},Δ{P}_{diff}\right)$ where:
***T_{diff}*** is the power compensation torque;
***P_{tgt}*** is the driver-demanded power;
Δ***P_{diff}*** is the difference **(*P_{tgt}*** - ***P_{act}*)** between the driver-demanded power ***P_{tgt}*** and the actually generated power ***P_{act}**.*

5. The control method according to any one of claims 1-4, wherein, the step of calculating a power compensation torque comprises obtaining the power compensation torque by interpolation lookup from a mapping table, according to the difference between the driver-demanded power and the actually generated power, and the driver-demanded power.

6. The control method according to any one of claims 1-5, wherein, the additional compensation torque include an accessory compensation torque, and the accessory compensation torque is calculated according to power consumption of engine accessories of the range extender.

7. The control method according to claim 6, wherein, the accessory compensation torque is calculated by the following equation: ${T}_{acc} = f \left({P}_{acc}, {N}_{act}\right)$ where:
***T_{acc}*** is the accessory compensation torque;
***P_{acc}*** is the power consumption of the engine accessories of the range extender;
***N_{act}*** is a current rotation speed of the engine of the range extender.

8. The control method according to any one of claims 6-7, wherein, the accessory compensation torque is calculated by the following equation: ${T}_{acc} = \frac{{P}_{acc}}{{N}_{act}} ∗ 9550$ where:
***T_{acc}*** is the accessory compensation torque;
***P_{acc}*** is the power consumption of the engine accessories of the range extender;
***N_{act}*** is a current rotation speed of the engine of the range extender.

9. The control method according to any one of claims 6-8, wherein, the step of determining whether to add an additional compensation torque comprises determining whether a drop in battery SOP of the power battery unit has occurred, and in the event of a gradual drop in the battery SOP, including the accessory compensation torque in the final compensation torque.

10. The control method according to any one of claims 6-9, wherein, the step of determining whether to add an additional compensation torque comprises including the accessory compensation torque in the final compensation torque at all times.

11. The control method according to any one of claims 1-10, wherein, the additional compensation torque include a charge compensation torque, wherein, the charge compensation torque is calculated according to the battery SOP of the power battery unit and an operation load of the engineering machinery vehicle.

12. The control method according to claim 11, wherein, the charge compensation torque is calculated by the following equation: **Tₛₒₚ** *= **T_{Init} * µ_{diff}***
where:
**Tₛₒₚ** is the charge compensation torque;
***T_{Init}*** is an initial charge compensation torque, which is a function of the battery SOP of the power battery unit and the operation load of the engineering machinery vehicle;
***µ_{diff}*** is a compensation factor, which is positively correlated to a rate of change of the battery SOP of the power battery unit over time.

13. The control method according to any one of claims 11-12, wherein, the step of determining whether to add an additional compensation torque comprises continuing to determine whether a drop in the battery SOP of the power battery unit has occurred, and upon detecting that the battery SOP of the power battery unit drops below a first charge threshold, including the charge compensation torque in the final compensation torque; when the battery SOP of the power battery unit rises back to a value equal to or greater than a second charge threshold, not including the charge compensation torque in the final compensation torque.

14. The control method according to claim 13, wherein, the second charge threshold is greater than or equal to the first charge threshold.
